# EUROPEAN PATENT APPLICATION

(11) **EP 2 928 223 A1**
(43) Date of publication of application: **07.10.2015**
(21) Application number: 14163626.6
(22) Date of filing: 04.04.2014
(51) Int. Cl.: H04W 8/18, H04W 40/34

(54) **Communication system and method for a wireless device**

(71) Applicant: Teleena Holding B.V., 3431 HK Nieuwegein (NL)
(72) Inventor: Baijens, Dirk, 3431 HK Nieuwegein (NL); Smit, Timo, 3431 HK Nieuwegein (NL)
(74) Representative: Nederlandsch Octrooibureau

(57) **Abstract**

The invention relates to improved data routing efficiency in and between cellular, WLANs, and other networks. It provides a communication system for a wireless device, the system comprising:
- a local radio node (40), for providing radio communications in a local communications network;
- a centralized gateway (48) in a further network outside the local communications network;
- a centralized profile repository (47) in the further network;
- a local profile repository (42) in the local communications network; and
- an enforcement function (43) in the local communications network,

wherein the local profile repository (42) is configured to retrieve user profile data from the centralized profile repository (47) and the enforcement function (43) is configured to route data in the local communications network based on the retrieved user profile data.

## Description

### Field of the invention

The invention relates to a communication system and method for a wireless device, in particular to a system and method for efficient data routing in wireless communication networks.

### Background of the invention

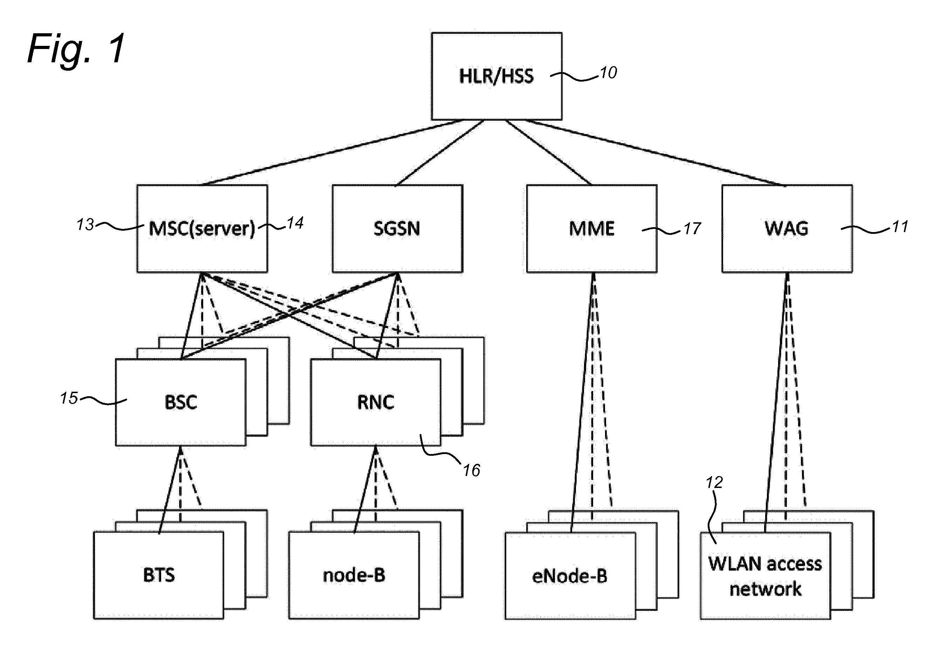

Seamless mobility is an important feature of cellular networks. It enables users to move from one cell to another and from one access technology to another while maintaining the service. In the evolution of cellular networks the control of mobility management has slightly changed. The top level in the hierarchy of mobility management control has remained at the Home Location Register (HLR) or Home Subscriber Server (HSS) 10 that is located in the subscriber's home network, as shown in figure 1 which schematically shows elements of a 2G/3G/4G cellular network.

2G networks were originally designed only to offer voice and SMS services. Mobility management in such networks is performed by the Base Station Controller (BSC) that control several base stations in a (geographic) region. MSCs/VLRs 13 control on a higher level the handovers between cells in different MSC/VLR areas. Mobile data services introduced two new network elements: SGSN 14 and GGSN. The Serving GPRS Support Node (SGSN) 14 as being the node dealing with mobility management in the RAN, and the GGSN (Gateway GPRS Support Node) as the data anchor point in the core network (without mobility management functionality). Note that figure 1 shows the mobility management architecture according to 3GPP specifications for different Radio Access Technologies (RATs). Nodes that primarily deal with the user data (Serving Gateway, Packet Gateway, GGSN) are not shown in figure 1.

3G networks have a similar high level architecture with optimizations for user and control plane separation for circuit switched (CS) services. In 3G networks the MSC/VLR has been replaced by an MSC-server 13 for the control functions, and Media Gateway (MGW) for user plane traffic. In the RAN the Radio Network Controller (RNC) 16 replaced the 2G BSC 15.

When Wi-Fi networks 12 became more popular in enterprises and public places, more access points were deployed near each other, and the need for seamless mobility between access points became clear. Wi-Fi was however never designed to offer mobility; a user just attaches to a network when within reach, and disconnects when there is no coverage anymore. This explains why mobility management control in Wi-Fi networks is user initiated instead of network initiated, as is the case with cellular networks.

Wi-Fi devices typically have the ability to attach to multiple Wi-Fi networks, using different user credentials (one at the time). In order to be more selective on the preference of an access point and to offer some kind of mobility management, connection managers can be installed on a device. A connection manager is a piece of software that monitors and controls the wireless interfaces. Commercial hotspot providers often provide a connection manager with their service. The software enables the device to select the highest quality or most cost effective access points that are available. Connection managers use the Service Set Identifier (SSID) of a preferred network in combination with the received signal level: the Received Signal Strength Indicator (RSSI). Furthermore some Wi-Fi client radios support other metrics like: signal-to-noise ratio, number of retransmission attempts in a given time period, number of expected AP beacons not received in a given time period, the data rate and the elapsed time since the last network scan.

Wi-Fi certified Passpoint was launched in 2012 as an industry-wide solution to streamline network access. Passpoint introduces GAS (Generic Advertisement Service). GAS allows a client to query the Access Point (AP) for configuration and reachability information before association. Passpoint optionally supports ANQP (Access Network Query Protocol) that passively scans for APs retrieving even more information elements. Scanning passively preserves battery power. Passpoint refers to the IEEE 802.11u standard, but is broader than just this specification.

Big corporate and campus networks with a high density of Wi-Fi access points and clients use Wi-Fi access controllers as an aggregation point for APs. Controllers are the anchor point for user data, manage and monitor the connected APs, and controllers are the gateway to other network functions (AAA, DHCP, etc.).

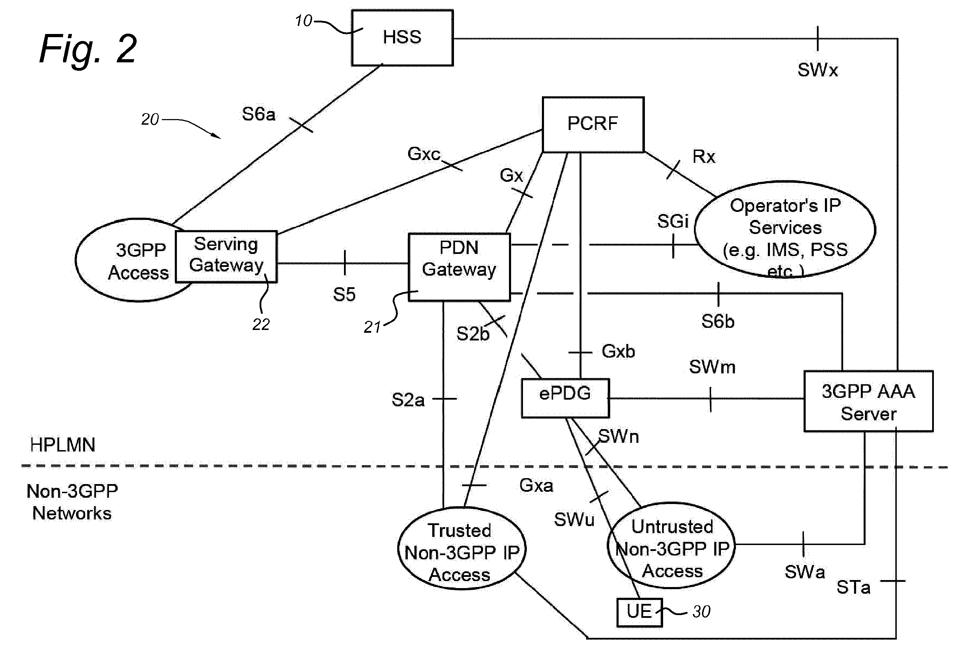

The 4th generation cellular architecture, more commonly called LTE architecture, is significantly different from the 2G and 3G predecessors. LTE only offers data services, and handovers between LTE cells are controlled centrally by a Mobility Management Entity (MME) 17. Aspects of an LTE network are shown in figure 2, which is discussed in more detail below. The user data is sent directly from the base station to a Serving Gateway (SGW) 22. The SGW 22 forwards its traffic to the PDN Gateway (PGW) 21 that has a similar function as the GGSN, and is therefore often combined with the GGSN. Note that WLAN access networks 12 typically use local access controllers that serve a number of access points. The controller takes care of the mobility management between the APs but can also be integrated in the WLAN Access Gateway (WAG) 11.

Interworking between cellular networks and Wi-Fi networks is described in 3GPP TS 23.402 "Architecture enhancements for non-3GPP accesses" (which also includes figure 2 in section 4.2.2). WLAN Interworking according to this specification is not seamless. The 3GPP architecture assumes that all user traffic is "backhauled" to the mobile core network. The architecture also assumes the presence of a WLAN Access Gateway (WAG) 11 in the domain of the Wi-Fi/WLAN operator. The WAG 11 has similar functionality as the SGW 22 in an LTE network.

There are in fact multiple 3GPP approaches for support of interworking and seamless mobility between the different access networks. Originally there was a differentiation between trusted and non-trusted access networks, as also shown in figure 2.

As was mentioned above, the architecture described in TS 23.402 and shown in figure 2 is based on backhauling all user data and control traffic to the PDN Gateway 21 in the 3GPP domain. This method uses the S2a interface for Trusted Non-3GPP IP Access or S2b for Untrusted Non-3GPP IP Access. S2a and S2b can be GTP (GPRS Tunneling Protocol) or PMIP (Proxy Mobile IP) based. The PGW ensures that the User Equipment is assigned the same IP address during a session whatever interface is used. The PGW will however assign an IP address to different physical addresses (3GPP or Wi-Fi), and this may result in not fully seamless mobility behaviour.

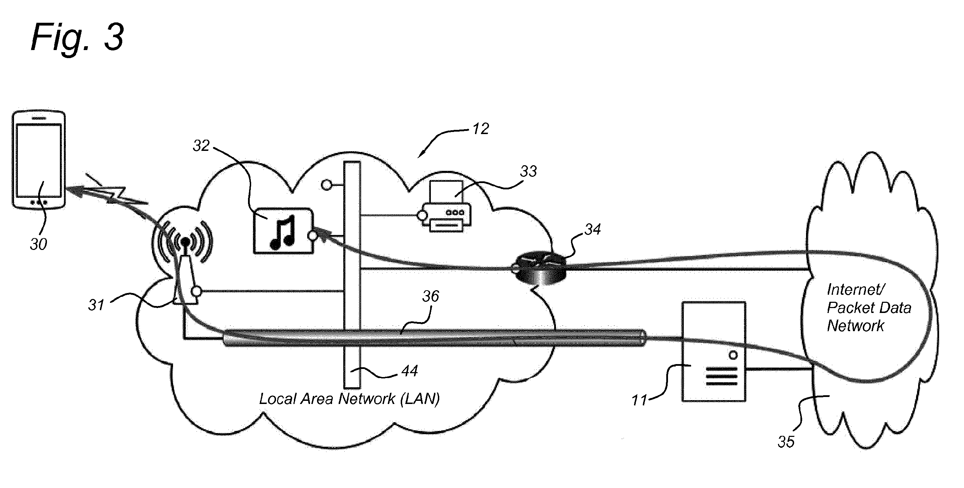

The process of backhauling is schematically shown in figure 3. All data from user device 30 (e.g. a mobile phone or portable terminal) is sent via Wi-Fi to the access point 31 of WLAN 12, which is connected to a LAN 44. Also connected to the LAN 44 are a home entertainment system 32 and a printer 33. According the 3GPP system, a tunnel 36 is created for data communication with WAG 11. The WAG is connected with internet 35, which in turn is connected to the LAN via local gateway/router 34. Data from the user device intended for entertainment system 32 or printer 33 is thus first sent, via tunnel 36, to a WAG in the cellular operator's network and then backhauled via internet 35 through router 34 to the LAN 44. Tunnelling can be achieved in different ways: for example using Layer 2 Tunnelling Protocol (L2TP), Proxy Mobile IP (PMIP), Dual Stack Mobile IPv6 (DSMIPv6), Generic Routing Encapsulation (GRE) or GPRS Tunnelling Protocol (GTP). A tunnelling approach does not support access to local resources. The backhauling path is indicated with the double-pointed arrow in figure 3. Because of the particular shape of the arrow, backhauling data is also called "tromboning".

The above described backhauling of data is not very efficient for user data that is intended for devices/systems on the local network. Among many examples are printers 32, home entertainment systems 33 and domotics. Moreover, local network devices are typically only accessible inside the Local Area Network (LAN). When seamless mobility is required, and a setup with backhauling traffic to an anchor point such as a PGW or HA (Home Agent) is implemented, the local devices will not be accessible at all. All user data will be routed to the anchor point and from that point being forwarded onto the Internet (or any other packet data network).

A solution would be to make the devices accessible from the public Internet. This is however not a very feasible solution. Unlike for example an on-site email server in a company it is unthinkable to assume that every residential device, like home entertainment systems, printers or domotics are accessible from the Internet with a unique address and with sufficient security measures. The fact that the majority of residential and enterprise devices are still using legacy IPv4 addresses (instead of IPv6) is also not helping. But even when IPv6 would be commonly deployed, a home user would need to have significant knowledge of IPv6 address management and corresponding security measures that need to be taken.

Furthermore this would result in inefficient routing of traffic. For example: the user data from a user that is attached to its home WLAN network and wants to listen to a music stream from his home entertainment system would need to be 'tromboned' via the anchor point 11, instead of sent directly from the home entertainment system to the client.

Another problem is that users need to have access with a single device to for example the printer at home and the printer at work. Both printers reside in different domains that are controlled by different people. This complicates access management.

Accordingly, there is a need for an improved way for seamless mobility between cellular and/or WLAN networks.

### Summary of the invention

One way to prevent inefficient backhauling of data is by providing a way for breaking out specific services locally. The place where services can be broken out differs per network. In cellular networks it is not very common, and generally also not needed, to break out traffic locally. The only exception is in roaming scenarios, where local breakout has the benefit of more efficient routing (tromboning avoidance). In (W)LAN environments it is however needed to access for example local printers, multimedia appliances and domotics. The approach that is chosen by standardization bodies is generally based on backhauling (using tunnels) all data to the operator's network, and thus not compatible with local break out.

The invention provides a communication system for a wireless device, the system comprising:
- a local radio node for providing radio communications in a local communications network;
- a centralized gateway in a further network outside the local communications network;
- a centralized profile repository in the further network;
- a local profile repository in the local communications network; and
- an enforcement function in the local communications network,
wherein the local profile repository is configured to retrieve user profile data from the centralized profile repository and the enforcement function is configured to route data based on the retrieved user profile data.

The user profile data is centrally kept in the further network, for example in a database included in or associated with a WAG, and a local network can make a copy of the user profile data relevant for that location (this may be a subset of the stored profile data for a user). Based on that information, a local radio node (e.g. an access point or a router associated with the access point having access to the local user profile, or a cellular node such as a femto or pico cell or even a H(e)node-B) can decide whether backhauling of the data through a tunnel (or any other gateway to a further network) is indicated or whether the data should be routed locally. That way, the seamless connectivity features of the 3GPP standard are preserved, while, where needed, local break out may be applied to increase efficiency and to make local devices reachable.

In an embodiment according the invention, the local radio node is one of an access controller with an access point, an access point, and a local node for a cellular network, such as a femto cell or a pico cell. These type of cells for a local cellular network are sometimes called "small cells". Various venders use specific brand names such as "nano cell" or "nanoBTS", others refer to "micro cells". A local radio node can be implemented using any of these cells.

In an embodiment according the invention, the data is received from a wireless device connected to the local radio node.

In an embodiment according the invention, the local communications network is a Wireless Local Area Network, WLAN.

In an embodiment according the invention, the local profile repository and/or the enforcement function is included in the local radio node.

In an embodiment according the invention, the user profile data includes one or more of: user credentials, venue network characteristics, routing rules, and access rules.

In an embodiment according the invention, the data is routed or switched to a device on the local communications network or to the centralized gateway, depending on the venue network characteristics.

In an embodiment according the invention, the system is configured to perform Network Address Translation or routing encapsulation/de-capsulation before routing/switching based on user profile characteristics.

In an embodiment according the invention, the routing is based on the user profile data in the local profile repository which matches user data associated with the wireless device.

According to a further aspect, the invention provides a local radio node, for providing radio communications in a local communications network, the local radio node comprising a local profile repository, wherein the local radio node is configured to connect to a centralized gateway and to a centralized profile repository, wherein said local profile repository is configured to retrieve user profile data from the centralized profile repository and the local radio node comprises an enforcement function configured to route data based on the retrieved user profile data.

In an embodiment according the invention, the local radio node is one of an access controller with an access point, an access point, and a local node for a cellular network, such as a femto cell or a pico cell.

According to a further aspect, the invention provides a computer program product comprising program instructions which, when executed on a processor of a local radio node, cause said local radio node to behave as described above.

According to a further aspect, the invention provides a method for communicating in a local communication network, the method comprising:
- receiving user profile data from a centralized profile repository;
- receiving, at a local radio node, data from a wirelessly connected device connected to said local radio node;
- routing or switching said data based on the user profile data, to a centralized gateway in a further network outside the local communications network or to a device on a local network or to a gateway in the local communication network.

In an embodiment according the invention, the data is routed to the device on the local network if the address of the device is included in the user profile data or if the address of the device matches a network mask in the user profile data.

### Brief description of the Figures

On the attached drawing sheets,
- figure 1 schematically shows elements of a 2G/3G/4G cellular network;
- figure 2 schematically shows a 4G architecture described in standard TS 23.402;
- figure 3 schematically shows backhauling data in a communication system;
- figure 4 schematically shows a communication system according to an embodiment of the invention;
- figure 5 schematically shows local break out of data in a communication system according to an embodiment of the invention; and
- figure 6 schematically shows a process of obtaining a local user profile according to an embodiment of the invention.

### Detailed description

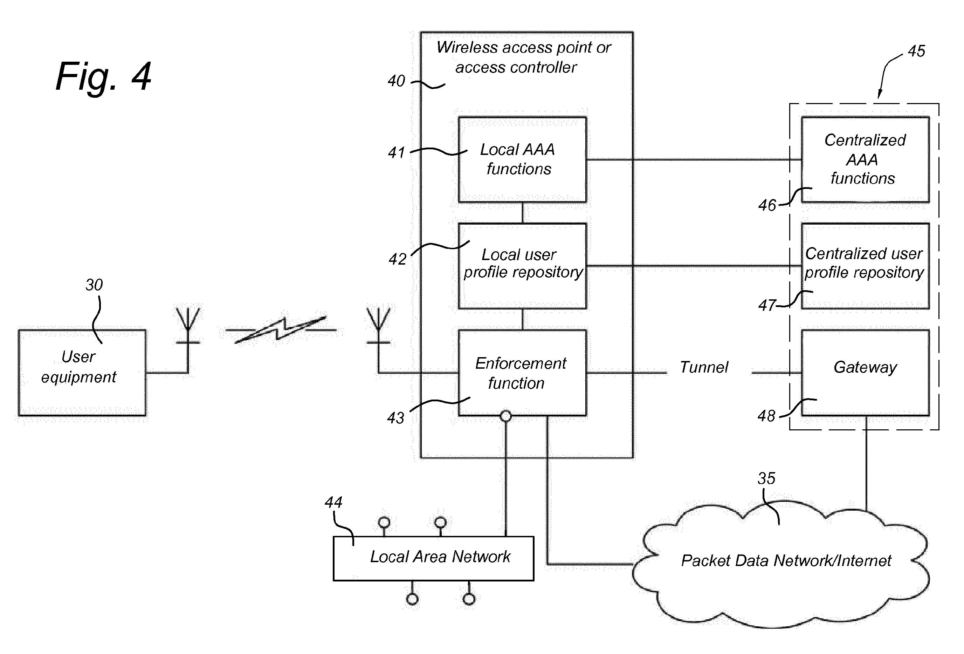

Figure 4 shows a communication system according to an embodiment of the invention. The wireless access point 40 or the access controller 40 (that serves multiple access points) contains an enforcement function 43 for routing (Layer 3 operation) or switching (Layer 2 operation) user data (from user equipment 30) to a centralized gateway 48 using a tunnelling protocol. The tunnelling protocol can be any of (but not limited to) Layer 2 Tunnelling Protocol (L2TP), Proxy Mobile IP (PMIP), Dual Stack Mobile IPv6 (DSMIPv6), Generic Routing Encapsulation (GRE) or GPRS Tunnelling Protocol (GTP). As a second option the enforcement function 43 can switch the traffic to a node in the Local Area Network (LAN). The third alternative is to send the traffic to a Packet Data Network 21 (or Internet 35) via a gateway. This gateway (not shown in figure 4) may be in the LAN 44.

In the example embodiment, a wireless access point 40 is shown. However, in an alternative embodiment according the invention, instead of a wireless access point for a WLAN, a cellular radio node is provided. For example, a femto or pico cell could be used. Even a (e-)node-B or base station could be used as local radio node for a local communication network. Therefore, reference numeral 40 can also refer to any one of the above mentioned local radio nodes, and numeral 12 refers to a corresponding local network.

User specific routing information is stored in the Local user profile repository 42 (which comprises data that is obtained from a centralized repository 47). Besides the routing information, also functions for Authentication, Authorization and Accounting (AAA) and IP address assignment, QoS parameters may be obtained via a local AAA function 41 from a centralized AAA function 46. This functionality could be integrated with the Local user profile repository 42. It is possible to use the same protocol for exchanging the information between the local, 41, 42, and centralized entities 46, 47 (e.g. RADIUS or Diameter).

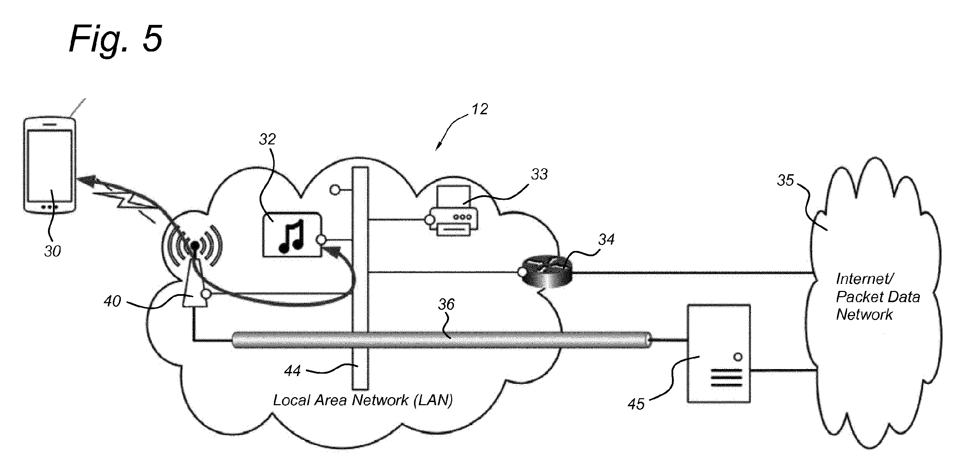

Figure 5 schematically shows a local breakout scenario that is enabled by the system of figure 4. In contrast to figure 3, to avoid tromboning of user data, messages can now also be broken out locally at the access point 40 or access controller 40 and routed or forwarded to the local device 32, 33 directly via LAN 44.

In prior art systems, there is no mechanism that is able to 'decide' whether the user data must be sent into the tunnel 36 towards the operators gateway 11, 45, or if it must be forwarded or routed locally. The embodiment of figure 4 uses a centralized Profile Repository 47 with a local equivalent 42. The centralized repository 47 may be included (possibly together with a centralized AAA function 46) in a combined gateway 45. On the local side, the local AAA function 41 and/or the local user profile repository 42 and/or the enforcement function 43 can be combined in a combined Access Point or Controller 40. Alternatively, one or more of these blocks 41, 42, 43, 46, 47, 48 may be provided in separate (interconnected) systems.

The information about all users and venues is stored in the centralized database 47. When an access point or access controller 40 is logically connected and authorized to a centralized gateway 48, it may 'tunnel' 36 user data to this gateway 48. It also may retrieve user profile data from the centralized repository 47 and store it locally (in local repository 42) for fast access. The user profile data is used to determine the right routing/forwarding decisions.

A user profile may be the combination of user credentials and specific venue network characteristics. A specific venue can be a LAN or WLAN with an Access Point 40 or Access Controller 40. A single individual can have a separate identity or belong to one or more different groups: a user can for example belong to the group of 'employees of company A', but at the same time to the group 'members of family B'.

A venue can include data that, when interpreted by the enforcement function 43, allows individual users or groups access to specific local devices 32, 33, or may cause routing via a specific gateway 34 or tunnel 36. Each venue can grant specific credentials, like: 'group A has access to all printers on network 10.10.10.0/24' or 'group B has access to appleTV.myhome.nl'.

The profile information can be stored centrally in a dedicated database 47, or can be integrated in a Subscriber Profile Repository (SPR), HLR/HSS 10, PCRF or ANDSF. In an embodiment of the invention, the 'owner' of the applicable venue is in charge of changing settings that apply for the venue network. The user and group credentials may be managed by the operator or by the user. It may be needed to grant venue owners, network administrators and individual users access via any kind of API to the profile database when this is not in their own domain. One way of implementing this would be for the operator of the centralized database 47 (e.g. the mobile provider) to make available a website or mobile application which can be used by users to modify their user profile, including editing details (such as local availability of devices 32, 33) of venues for which they are responsible.

A user may use one or multiple devices with one or multiple user credentials. Some devices may be shared with other users and some devices are personal. When a device is shared, it may contain multiple user IDs, or it may have a single (or no) user ID. When no user specific credentials are used for a device, the device itself could be considered as a separate user with a separate profile.

The above method of using profiles is just one way of doing it; there are more ways according the invention to store profile data and to deal with the traffic at the access point side. According the invention, information about the end user and the venue network is stored in a profile, and that the profile is easily accessible by the local access point or controller.

When a profile has been set for a user or a group, the profile needs to be pushed to the local network that is serving the user (or may serve the user). There may be different places within the (W)LAN 12, 44 where this information may be stored. A separate profile repository 42 may be used that can be queried by a WLAN access point 40, access controller or router. It is possible to integrate this function in one of the mentioned existing devices. The choice of the device may differ depending on the type of LAN. In case of residential networks, the most logical place may be the access point 40. In enterprise networks a WLAN controller or access router may be a more logical place.

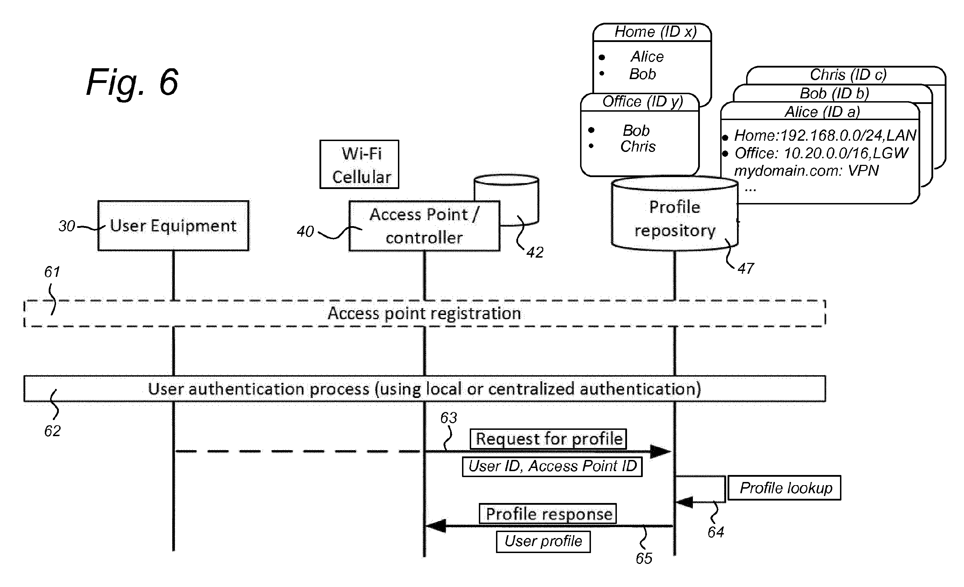

Profiles can be activated (pushed to the local network device) just once when the profile is created or changed, but it is also possible to update profiles on a more regular basis, e.g. once a day or once a week or when a user attaches to a network. Also new or replaced local devices 32, 33 must be populated with profile information for specific users. This is illustrated in figure 6.

User profiles can be exchanged between access point 40 and centralized repository 47 using for example RADIUS or Diameter operations. There is an access point registration 61 process which must be performed at least once so that the centralized and local repositories are connected.

The user authentication process 62 identifies a user of the user equipment 30 (this may be a generic user or group - i.e. anyone with access credentials to a residential WLAN may be considered a generic user for that WLAN venue). After this, the local repository 42 requests 63 the centralized repository 47 for user profile data. The centralized repository 47 looks up the required user profiles in step 64. Then the found profiles are pushed 65 to the local equivalent database 42. The next step is to identify specific service flows that need to be routed locally, based on the received user profiles.

There are different possible identifiers that can be chosen to recognize and classify the traffic; for example:
- IP address (IPv4 or IPv6)
- IPv4 subnet or IPv6 prefix (IPv4: 192.168.0.0/24 or IPv6: 2001:0DB8:AC10:FE01::)
- Fully Qualified Domain Name (FQDN)
- Hostname
- Service (e.g. email, printing, multimedia payload)
- BSSID in case of Wi-Fi
- RADIUS NAS identifier
- cell-ID in case of 3G femto cell
- any other network (sufficiently) unique identifier

An identifier can also be more generic, like all private IPv4 addresses (IETF RFC 1918 addresses: 10.0.0.0/8, 172.16.0.0/12 and 192.168.0.0/16).

Different profiles for a single subscriber or group can be pushed to a specific venue, a specific venue type or a specific access technology (i.e. Wi-Fi or LTE). Location information can be used to provide specific rules. The location information can be identified by i.e. BSSID in case of Wi-Fi, a RADIUS NAS identifier, IP address, a cell-ID in case of 3G femto cell or any other network unique identifier. The location information can be obtained during the access point or cell registration process in combination with the authentication process.

After identifying the specified traffic flow, the related messages need to be routed alternatively instead of tunnelled to the traffic anchor point 11, 45. The data flow can be locally significant; for example when the destination is a local printer 32 or when a multimedia source 33 is accessed. In such case the data needs to be conveyed to a host in the same Local Area Network, as has been discussed in reference to figures 4 and 5.

Another variant is to route traffic to a predetermined gateway 34 (in the local network) for example in case certain security policies need to be applied.

In the foregoing description of the figures, the invention has been described with reference to specific embodiments thereof. It will, however, be evident that various modifications and changes may be made thereto without departing from the scope of the invention as summarized in the attached claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. Communication system for a wireless device, the system comprising:
- a local radio node (40), for providing radio communications in a local communications network;
- a centralized gateway (48) in a further network outside the local communications network;
- a centralized profile repository (47) in the further network;
- a local profile repository (42) in the local communications network; and
- an enforcement function (43) in the local communications network,
wherein the local profile repository (42) is configured to retrieve user profile data from the centralized profile repository (47) and the enforcement function (43) is configured to route data based on the retrieved user profile data.

2. The system of claim 1, wherein the local radio node (40) is one of an access controller with an access point, an access point, and a local node for a cellular network, such as a femto cell or a pico cell.

3. The system of claim 1 or 2, wherein the data is received from a wireless device (30) connected to the local radio node (40).

4. The system of any one of the previous claims, wherein the local communications network is a Wireless Local Area Network, WLAN.

5. The system according to any one of the preceding claims, wherein the local profile repository (42) and/or the enforcement function (43) is included in the local radio node (40).

6. The system according to any one of the preceding claims, wherein the user profile data includes one or more of: user credentials, venue network characteristics, routing rules, and access rules.

7. The system according to any one of the preceding claims, wherein the data is routed or switched to a device (32, 33) on the local communications network or to the centralized gateway (48), depending on the venue network characteristics.

8. The system according to claim 7, wherein the system is configured to perform Network Address Translation (NAT) or routing encapsulation/de-capsulation before routing/switching based on user profile characteristics.

9. The system according to 3, wherein the routing is based on the user profile data in the local profile repository (42) which matches user data associated with the wireless device (30).

10. Local radio node (40), for providing radio communications in a local communications network, the local radio node comprising a local profile repository (42), wherein the local radio node is configured to connect to a centralized gateway (48) and to a centralized profile repository (47), wherein said local profile repository (42) is configured to retrieve user profile data from the centralized profile repository (47) and the local radio node (40) comprises an enforcement function (43) configured to route data based on the retrieved user profile data.

11. The node of claim 10, wherein the local radio node (40) is one of an access controller with an access point, an access point, and a local node for a cellular network, such as a femto cell or a pico cell.

12. Computer program product comprising program instructions which, when executed on a processor of a local radio node, cause said local radio node to behave according to claim 10 or 11.

13. Method for communicating in a local communication network, the method comprising:
- receiving user profile data from a centralized profile repository;
- receiving, at a local radio node (40), data from a wirelessly connected device connected to said local radio node;
- routing or switching said data based on the user profile data, to a centralized gateway (48) in a further network outside the local communications network or to a device (32, 33) on a local network or to a gateway in the local communication network.

14. Method according to claim 9, wherein the data is routed to the device (32, 33) on the local network if the address of the device is included in the user profile data or if the address of the device matches a network mask in the user profile data.
